# EUROPÄISCHE PATENTSCHRIFT

(11) **EP 0 550 839 B1**
(45) Veröffentlichungstag und Bekanntmachung des Hinweises auf die Patenterteilung: **13.03.1996**
(21) Anmeldenummer: 92120963.1
(22) Anmeldetag: 09.12.1992
(51) Int. Cl.: H02G 3/08

(54) **Kastenförmige Anschlussdose für Elektrokabel**
Connection box for electrical cable
Boîte de jonction en forme de caisson pour câble électronique

(30) Priorität: 10.01.1992 CH 56/92
(43) Veröffentlichungstag der Anmeldung: 14.07.1993
(73) Patentinhaber: AGRO AG, CH-5502 Hunzenschwil (CH)
(72) Erfinder: Meier, Alfred, CH-8049 Zürich (CH)
(74) Vertreter: Fillinger, Peter, Dr.

(56) Entgegenhaltungen:
- WO-A-85/01396
- GB-A- 2 057 782

## Beschreibung

Die vorliegende Erfindung bezieht sich auf eine kastenförmige Anschlussdose gemäss dem Oberbegriff des Patentanspruchs 1. Eine Anschlußdose dieser Art ist aus WO-A-8 501 396 bekannt. Aus der CH-PS 646 550 ist ferner eine Kunststoffdose mit Anschlussklemmen für Elektrokabel bekannt. Bei der bekannten Dose sind die auf den Seitenwänden befindlichen Membrane zentral gelocht, um als Würgemembrane für die Elektrokabel zu dienen, und durch entsprechende äussere Wandvertiefungen geschaffen. Zum Verschliessen der Membranlöcher sind in die Vertiefungen Abschlussscheiben mit durch das Membranloch nach innen ragenden Zapfen wegnehmbar eingesetzt.

Die bekannte Anschlussdose hat eine grössere Anzahl von Abschlussscheiben mit Zapfen, die separat herzustellen ist, da im Verkaufszustand jedes Membranloch verschlossen sein muss und derartige Dosen beispielsweise insgesamt zehn gelochte Würgemembrane auf den vier Seitenwänden aufweisen.

Es ist Aufgabe der Erfindung, eine Anschlussdose der eingangs genannten Art zu schaffen, bei welcher die Membrane zur Einführung der Elektrokabel in einfacher Weise lochbar sind.

Zur Lösung dieser Aufgabe weist die erfindungsgemässe Anschlussdose die im kennzeichnenden Teil des Patentanspruchs 1 angeführten Merkmale auf. Aus diesen sind die aufgabengemässen Vorteile der erfindungsgemässen Anschlussdose ohne weiteres ersichtlich. Die Dicke der Membran ist im zentralen Bereich grösser als im radial äusseren Bereich. Das Ausstossen des zentralen Bereichs zwecks Bildung des Membranlochs wird dadurch erleichtert.

Vorzugsweise ist der Sollbruchbereich als eine an der Innenseite der Seitenwand zwischen dem zentralen Bereich und dem radial äusseren Bereich befindliche Nut ausgebildet. Dies erlaubt eine leichte Herstellung des einstückigen Unterteils der erfindungsgemässen Anschlussdose.

Jede Membran kann in einfacher Weise durch eine innere Vertiefung der betreffenden Seitenwand gebildet sein.

Zweckmässigerweise hat die ringförmige Nut mindestens angenähert einen V-förmigen Querschnitt, das heisst einen konischen Anzug, was die Ausbildung der Nut im einstückigen Unterteil erleichtert.

Ein Ausführungsbeispiel der erfindungsgemässen Anschlussdose wird nachstehend anhand der Zeichnungen erläutert. Es zeigen:
Fig. 1 eine Draufsicht auf das Innere des Unterteils der Anschlussdose;
Fig. 2 eine Seitenansicht des Unterteils der Fig. 1;
Fig. 3 in grösserem Massstab einen Horizontalschnitt durch eine Membran der Fig. 1 und 2;
Fig. 4 in nochmals grösserem Massstab ausschnittsweise den Horizontalschnitt der Fig. 3 an der Stelle der ringförmigen Nut; und
Fig. 5 eine Draufsicht auf die Nut im Ausschnitt der Fig. 4.

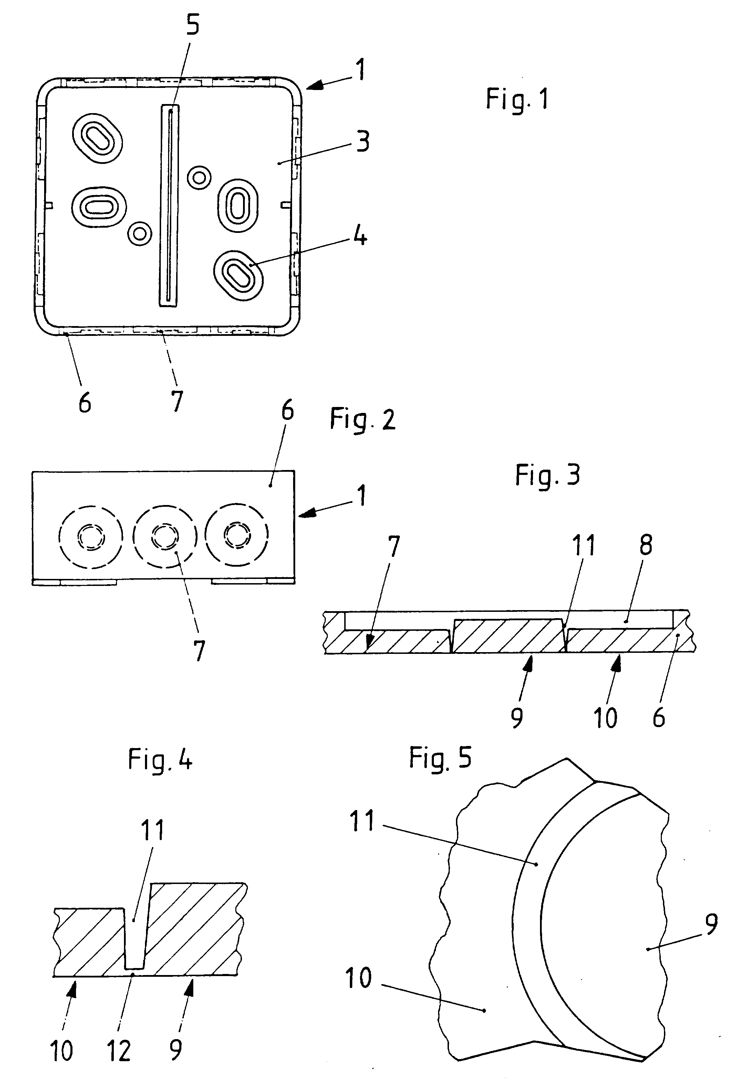

In an sich bekannter Weise weist die vorliegende Anschlussdose gemäss den Fig. 1 und 2 ein aus Kunststoff bestehendes Unterteil 1 mit quadratischem Grundriss auf. Das Unterteil 1 ist durch einen nicht dargestellten Deckel verschliessbar, der auf das Unterteil 1 vorzugsweise mit Reibungssitz aufsetzbar oder mit Rastverschluss aufsteckbar ist. Der Boden 3 des Unterteils 1 ist in ebenfalls bekannter Weise mit mehreren angeformten Vorsprüngen 4, 5 versehen. Beispielsweise dienen die Wülste 4 der Befestigung des Unterteils an Wänden, Decken, Kanälen usw., während in den schlitzförmigen Vorsprung 5 ein Klemmenhalter oder Klemmensteg einsetzbar ist.

In den Fig. 1 und 2 sind durch gestrichelte Linien in den Seitenwänden 6 ausgebildete kreisförmige Membrane 7 angedeutet, die weder in der Draufsicht der Fig. 1, noch in der Seitenansicht der Fig. 2 sichtbar sind. In Fig. 3 ist in einem Horizontalschnitt ein Teil der Seitenwand 6 mit der Membran 7 in wesentlich grösserem Massstab dargestellt.

Aus Fig. 3 ist ersichtlich, dass die äussere Membran 7 dadurch gebildet ist, dass an der betreffenden Stelle der Seitenwand 6 eine innere kreisrunde Vertiefung 8 vorliegt, die demnach an dieser Stelle eine Verminderung der Wandstärke der Seitenwand 6 bewirkt.

Damit die Membran 7 bestimmungsgemäss die Funktion einer an sich bekannten Würgemembran für ein in das Innere des Unterteils 1 einzuführendes und durch die Membran 7 festzuklemmendes Elektrokabel ausüben kann, muss sie ein zentrales Loch aufweisen, dessen Durchmesser kleiner ist als derjenige des kleinsten zur Verwendung vorgesehenen Elektrokabels.

Um wahlweise eine beliebige der gemäss Fig. 1 und 2 mehreren Membrane 7 mit einem derartigen Loch versehen zu können, ist gemäss Fig. 3 zwischen einem zentralen Bereich 9 und einem radial äusseren Bereich 10 jeder Membran 7 eine innere ringförmige Nut 11 ausgebildet. Die Nut 11 erstreckt sich von der Innenseite der Membran 7 her bis nahezu zur Aussenfläche der Seitenwand 6, so dass der zentrale Bereich 9 der Membran 7 mit deren äusserem Bereich 10 nur noch über ein schmales und dünnes, nahezu kreislinienförmiges Wandstück 12 zusammenhängt, wie dies aus der einen nochmals grösseren Massstab aufweisenden Darstellung der Fig. 4 hervorgeht. Folglich kann an derjenigen Membran 7, welche zum Einführen und Festklemmen eines Elektrokabels vorgesehen ist, durch eine einfache Druckausübung von aussen auf den zentralen Bereich 9 dieser mittels des einzuführen-den Kabels oder eines Gegenstandes, z.B. eines Schraubenziehers, vom äusseren Bereich 10 getrennt und eingestossen werden. Die übrigen Partien der Seitenwände 6 verbleiben hierbei in vorteilhafter Weise auch an den Stellen der nicht benutzten Membrane 7 eben und glatt.

Um die Ausbildung der Nut 11 bei der Herstellung des einstückigen Unterteils zu erleichtern, hat die Nut 11 vorzugsweise einen konischen Anzug, das heisst eine im wesentlichen V-förmige Querschnittsform mit einem geringen Neigungswinkel der beiden Schenkel von beispielsweise 3° (Fig. 3- 5). Ferner weist der zentrale Bereich 9 eine grössere Dicke als der radial äussere Bereich 10 auf, so dass der zentrale Bereich 9 verhältnismässig steif gegenüber dein radial äusseren Bereich 10 ist und somit leicht eingedrückt werden kann.

Als Sollbruchbereich kann auch eine andere Art der Materialschwächung zwischen dem zentralen Bereich 9 und dem radial äusseren Bereich 10 vorgesehen werden.

Es ist ersichtlich, dass bei der erfindungsgemässen Anschlussdose zusätzliche, einen unnötigen Material- und Kostenaufwand verursachenden Teile zum ursprünglichen Verschliessen von vorhandenen Oeffnungen oder später anzubringenden Pfropfen, wie bis heute üblich, restlos entfallen.

## Patentansprüche

1. Kastenförmige Anschlussdose mit einem durch einen Deckel verschliessbaren Unterteil (1), in welches Anschlussklemmen für Elektrokabel einsetzbar sind und welches an mindestens einer Seitenwand (6) ausgebildete Membrane (7) aufweist, die zum Einführen der Elektrokabel in das Unterteil (1) und zu deren Festklemmen mit einem zentralen Loch versehbar sind, wobei jede Membran (7) mit der Aussenfläche der Seitenwand (6) glatt bündig ist, und wobei sich zwischen einem zentralen Bereich (9) und einem radial äusseren Bereich (10) der Membran (7) ein Sollbruchbereich (11) befindet, derart, dass der zentrale Bereich (9) zur Lochung der Membran (7) mittels Druckausübung eindrückbar ist dadurch gekennzeichnet, daß die Membrane als Würgemembrane ausgebildet sind und dass die Dicke der Membran (7) im zentralen Bereich (9) grösser als im radial äusseren Bereich (10) ist.

2. Anschlussdose nach Anspruch 1, dadurch gekennzeichnet, dass der Sollbruchbereich durch eine auf der Innenseite der Seitenwand (6) befindliche, ringförmige Nut (11) zwischen dem zentralen Bereich (9) und dem radial äusseren Bereich (10) der Membran (7) gebildet ist.

3. Anschlussdose nach Anspruch 1 oder 2, dadurch gekennzeichnet, dass die Membran (7) durch eine innere Vertiefung (8) der Seitenwand (6) gebildet ist.

4. Anschlussdose nach einem der Ansprüche 2 und 3, dadurch gekennzeichnet, dass die ringförmige Nut (11) mindestens angenähert einen V-förmigen Querschnitt hat.

## Claims

1. A boxshaped connector case, comprising a base (1) which is closable by a cover and into which connecting clamps for electrical cables are insertible and which has on at least one side wall (6) a diaphragm (7) which is providable with a central hole for insertion of the electrical cables into the base (1) and for clamping of the cable, and that each diaphragm (7) is flush with the outside surface of the side wall (6), and that between a central area (9) and a radially outer area (10) of the diaphragm (7) is positioned a breaking area (11), so that the central area (9) can be forcibly pressed inward for the purpose of perforating the diaphragm (7), **characterized in that** the diaphragm is designed as a crimping diaphragm and that the thickness of the diaphragm (7) is greater in the central area (9) than in the radially outer area (10).

2. A boxshaped connector case according to Claim 1, **characterized in that** the breaking area is established by an annular groove (11) on the inside of the side wall (6) between the central area (9) and the radially outer area (10) of the diaphragm (7).

3. A boxshaped connector case according to Claim 1 or 2, **characterized in that** the diaphragm (7) is formed by an inner groove (8) of the side wall (6).

4. A connector case according to one of Claims 2 and 3, **characterized in that** the annular groove (11) is at least virtually of V-shaped cross-section.

## Revendications

1. Boîte de jonction en forme de caisson composé d'une partie inférieure (1) obturable par un couvercle, dans laquelle peuvent être installées des cosses de raccordement de câbles électriques et dont au moins une paroi latérale (6) a la forme d'une membrane (7) qui peut présenter un trou central permettant d'introduire des câbles électriques dans la partie inférieure (1) et de les fixer par pincement, chaque membrane (7) étant raccordée avec affleurement à plat à la face externe de la paroi latérale (6) et présentant entre une zone centrale (9) et une zone radiale (10), située vers l'extérieur, une zone de rupture prépositionnée (11), de sorte que la zone centrale (9) peut être enfoncée par pression en créant un trou de passage à travers la membrane (7), caractérisée en ce que les membranes sont du type à striction et que l'épaisseur de la membrane (7) est plus grande dans sa zone centrale (9) que dans la zone radiale externe (10).

2. Boîte de jonction selon la revendication 1, caractérisée en ce que la zone de rupture prépositionnée est définie par une rainure annulaire (11) dans la face interne de la paroi latérale (6), entre la zone centrale (9) et la zone radiale externe (10) de la membrane (7).

3. Boîte de jonction selon la revendication 1 ou 2, caractérisée en ce que la membrane (7) est formée par une cavité (8) de la paroi latérale (6), sur sa face interne.

4. Boîte de jonction selon une des revendications 2 et 3, caractérisée en ce que la rainure annulaire (11) présente, au moins approximativement, une section en forme de V.
